# EUROPÄISCHE PATENTSCHRIFT

(11) **EP 0 522 306 B1**
(45) Veröffentlichungstag und Bekanntmachung des Hinweises auf die Patenterteilung: **18.09.1996**
(21) Anmeldenummer: 92109978.4
(22) Anmeldetag: 13.06.1992
(51) Int. Cl.: C08F 8/30, C08G 18/80, C08G 18/62, C09J 175/00, C09J 133/14, C09J 129/12

(54) **Bei Raumtemperatur vernetzende, wässrige Kunstharzzubereitung und ihre Verwendung als Kaschierkleber**
Room temperature curing aqueous synthetic resin composition and its use as laminating adhesive
Composition aqueuse de résine synthétique durcissable à température ambiante et son utilisation comme adhésif pour stratifiés

(30) Priorität: 03.07.1991 DE 4121946
(43) Veröffentlichungstag der Anmeldung: 13.01.1993
(73) Patentinhaber: BASF Aktiengesellschaft, 67063 Ludwigshafen (DE)
(72) Erfinder: Filges, Ulrich, Dr., W-6703 Limburgerhof (DE); Haeberle, Karl, Dr., W-6730 Neustadt (DE); Maempel, Lothar, Dr., W-6835 Bruehl (DE); Aydin, Oral, Dr., W-6800 Mannheim 1 (DE); Bauer, Gerhard, Dr., W-6940 Weinheim (DE)

(56) Entgegenhaltungen:
- DE-A- 2 817 607
- GB-A- 934 385
- US-A- 4 230 772

## Beschreibung

Die Erfindung betrifft wäßrige Dispersionen eines radikalisch polymerisierten Copolymerisats, welches zu 0,01 bis 40 Gew.-% aus Comonomeren mit mindestens einer Aldehyd- oder Ketogruppe besteht, enthaltend mindestens ein Polyisocyanat, dessen Isocyanatgruppen mit Oximen blockiert sind.

Kaschierkleber werden z.B. für die Herstellung von Verbundfolien benötigt, welche bei der Lebensmittelverpackung Verwendung finden. Durch die Verklebung bzw. Kaschierung von Folien aus unterschiedlichen Werkstoffen werden Eigenschaften dieser Werkstoffe kombiniert.

Ziel einer solchen Maßnahme kann es sein, besondere dekorative Effekte zu erreichen, oder technische Effekte wie Schutz eines Aufdrucks, Erzeugung kochfester Folienverbunde, Unterbindung der Dampfdiffusion, Heißsiegelbarkeit, zuverlässige Vermeidung der Porigkeit oder Beständigkeit gegen aggressive Güter zu bewirken. Die Folienwerkstoffe, die im wesentlichen eingesetzt werden, sind Polyethylen, Polypropylen, insbesondere biaxial gerecktes Polypropylen, Polyamid, Polyester, PVC, Polyvinylacetate, Zellglas und Metalle wie Zinn und Aluminium.

Bei üblicherweise eingesetzten Kaschierklebern handelt es sich z.B. um in organischen Lösungsmitteln gelöste Bindemittel, bzw. Bindemittelsysteme, welche durch Reaktionen von Polyisocyanatverbindungen mit Hydroxygruppen tragenden Polyestern oder Polyethern oder unter Einwirkung von Wasser auf Polyisocyanatverbindungen vernetzen.

Als Lösungsmittel werden in der Regel Benzin, Toluol, Aceton und Ethylacetat eingesetzt. Die Verwendung derartiger Lösungen als Kaschierkleber ist jedoch problematisch und technisch aufwendig, da wegen der Feuergefährlichkeit dieser Lösungsmittel explosionsgeschützte Beschichtungsanlagen eingesetzt werden müssen und Vorrichtungen für die Rückgewinnung der Lösungsmittel erforderlich sind. Ferner beeinträchtigen Restlösungsmittel in den Verbundlaminaten die einzupackenden Füllgüter durch Geschmacks- und Gerucksbeeinflussung.

Des weiteren handelt es sich bei diesen Systemen im allgemeinen um 2-Komponentensysteme, da die reaktiven Komponenten zur Vermeidung vorzeitiger Vernetzungsreaktionen erst kurz vor der Verwendung gemischt werden.

Aus der DE-A-35 21 618 sind wäßrige Klebstoffzubereitungen bekannt, bei denen in Wasser dispergierte Polyisocyanate wäßrigen Dispersionen radikalisch polymerisierter Copolymerisate als Vernetzungshilfsmittel zugesetzt werden. Ähnliche Klebstoffzubereitungen sind auch in der US-A-43 96 738 und DE-A-31 12 117 beschrieben.

Nachteilig bei diesen wäßrigen Zubereitungen ist jedoch die mangelnde Lagerstabilität. Das Polyisocyanat darf daher erst kurz vor seiner Verwendung als Vernetzungshilfsmittel in Wasser dispergiert und mit dem Copolymerisat gemischt werden.

Eine erhöhte Lagerstabilität kann durch Umsetzung der Isocyanatgruppen mit Blockierungsmitteln, z.B. Oximen, Caprolactam, Phenolen, Maleinsäuredialkylestern erreicht werden. Die erhaltenen sog. blockierten Polyisocyanate hydrolysieren in wäßriger Dispersion nur noch in untergeordnetem Ausmaß.

Gegenstand der DE-A-38 07 555 ist ein solches, mit Oximen blockiertes Diisocyanat, welches in Wasser dispergiert wird und sich als Zusatz für in Wasser dispergierte Polymerisate eignet.

Vernetzungsreaktionen treten jedoch erst nach Abspaltung des Blockierungsmittels bei Temperaturen ab ca. 130°C auf.

Bisher bekannte wäßrige Klebstoffzubereitungen mit Polyisocyanaten als Vernetzungshilfsmittel sind daher entweder nicht lagerstabil und können nur als 2-Komponentensystem Verwendung finden oder vernetzen erst bei hohen Temperaturen. Letztere sind als Kaschierkleber aufgrund der mangelnden thermischen Belastbarkeit z.B. von Kunststoffolien vielfach ungeeignet.

Aufgabe der vorliegenden Erfindung waren daher lagerstabile, bei Raumtemperatur vernetzende, wäßrige Klebstoffzubereitungen.

Demgemäß wurden die eingangs definierten wäßrigen Dispersionen, ihre Herstellung, ihre Verwendung als Klebstoff sowie beschichtete Substrate, Verbund- und Glanzfolien, die unter Verwendung der wäßrigen Dispersionen erhältlich sind, gefunden.

Die wäßrigen Dispersionen enthalten ein Copolymerisat mit Keto- oder Aldehydgruppen und ein mit Oximen blockiertes Polyisocyanat. Diese Dispersionen sind überraschenderweise sowohl lagerstabil als auch bei Raumtemperatur vernetzbar. Die Vernetzung verläuft möglicherweise nach folgendem Schema:

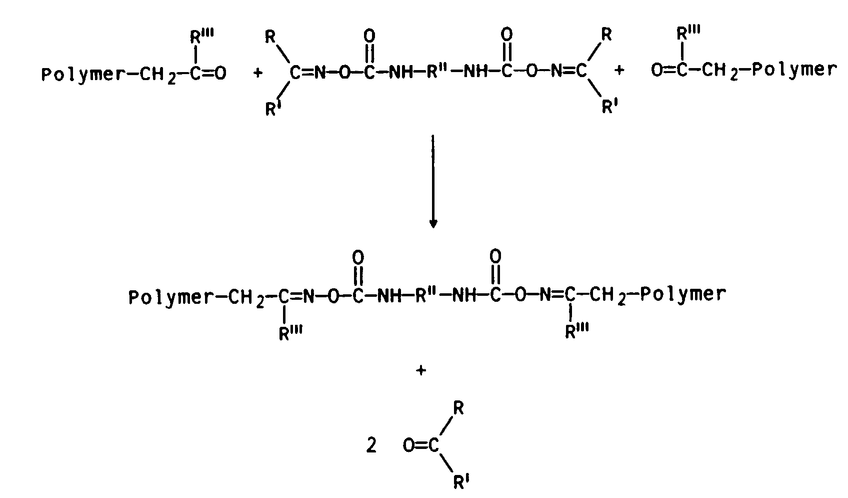

Die Vernetzung wird nach diesem Schema durch eine Umoximierung bewirkt.

Weitere Ausführungen betreffen die Bestandteile der erfindungsgemäßen Dispersionen, Verfahren zu ihrer Herstellung sowie ihre Verwendung.

Die erfindungsgemäßen wäßrigen Dispersionen enthalten ein radikalisch polymerisiertes Copolymerisat, das zu 0,01 bis 40 Gew.-%, bevorzugt 0,1 bis 20 Gew.-% und ganz besonders bevorzugt zu 0,5 bis 10 Gew.-% aus Comonomeren (a) mit mindestens einer Aldehyd- oder Ketogruppe besteht. Vorzugsweise handelt es sich um ein Comonomer mit ein oder zwei Aldehy-, bzw. Ketogruppen oder einer Aldehyd- und einer Ketogruppe und einer radikalisch polymerisierbaren olefinischen Doppelbindung.

In Betracht kommen z.B. Acrolein, Methacrolein, Vinylalkylketone mit 1 bis 20, vorzugsweise 1 bis 10 Kohlenstoffatomen im Alkylrest, Formylstyrol, (Meth-)acrylsäurealkylester mit ein oder zwei Keto- oder Aldehy-, bzw. einer Aldehy- und einer Ketogruppe im Alkylrest, wobei der Alkylrest vorzugsweise insgesamt 3 bis 10 Kohlenstoffatome umfaßt, z.B. (Meth)acryloxyalkylpropanale, wie sie in der DE-A-27 22 097 beschrieben sind. Des weiteren eignen sich auch N-Oxoalkyl(meth)acrylamide wie sie z.B. aus der US-A-4 226 007, der DE-A-20 61 213 oder DE-A-22 07 209 bekannt sind.

Besonders bevorzugt sind Acetoacetyl(meth)acrylat, Acetoacetoxyethyl(meth)acrylat und insbesondere Diacetonacrylamid.

Die Monomeren b) sind normalerweise in dem Copolymerisat zu 60 bis 99,99, bevorzugt 80 bis 99,9 und besonders bevorzugt zu 90 bis 99,5 Gew.-%, bezogen auf das Copolymerisat, enthalten.

Als Monomere b) kommen Ester der Acryl- oder Methacrylsäure von 1 bis 20 C-Atome enthaltenden Alkylalkoholen in Frage. Als solche Alkohole seien genannt Methanol, Ethanol, n- oder i-Propanol, n-, s- und t-Butanol, n-Pentanol, Isoamylalkohol, n-Hexanol, Octanol, 2-Ethylhexanol, Lauryl- und Stearylalkohol.

Gute Ergebnisse werden mit (Meth)-acrylsäurealkylestern mit einem C₁-C₁₀-Alkylrest, wie Methylmethacrylat, Methylacrylat, n-Butylacrylat, Ethylacrylat und 2-Ethylhexylacrylat erzielt.

Insbesondere sind auch Mischungen der (Meth)acrylsäurealkylester geeignet.

Weiterhin kommen in Frage Vinylester von Carbonsäuren mit 1 bis 20 C-Atomen wie Vinyllaurat, -stearat, Vinylpropionat und Vinylacetat.

Als vinylaromatische Verbindungen kommen Vinyltoluol, α- und p-Styrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und mindestens zwei, insbesondere zwei olefinischen Doppelbindungen seien Butadien, Isopren und Chloropren genannt.

Die Monomeren b) können auch im Gemisch eingesetzt werden.

Als weitere, d.h. nicht unter a) und b) fallende, copolymerisierbare Monomere c) kommen die folgenden Monomeren in Betracht.

In Frage kommen Ester der Acryl- und Methacrylsäure von Alkoholen mit 1 bis 20 C-Atomen, die außer dem Sauerstoffatom in der Alkoholgruppe mindestens ein weiteres Heteroatom enthalten und/oder die einen aliphatischen oder aromatischen Ring enthalten.

Genannt seien 2-Ethoxyethylacrylat, 2-Butoxyethyl(meth)acrylat, Dimethylaminoethyl(meth)acrylat, Diethylaminoethyl(meth)acrylat, (Meth)acrylsäurearyl-, -alkaryl- oder cycloalkylester, wie Cyclohexyl(meth)acrylat, Phenylethyl(meth)-acrylat, Phenylpropyl(meth)acrylat- oder Acrylsäureester von heterocyclischen Alkoholen wie Furfuryl(meth)acrylat.

Darüber hinaus seien noch weitere Comonomere wie (Meth)acrylamid sowie deren am Stickstoff mit C₁-C₄-Alkyl substituierten Derivate.

Von besonderer Bedeutung sind hydroxyfunktionelle Comonomere, z.B. (Meth)acrylsäure-C₁-C₁₅-alkylester, welche durch ein oder zwei Hydroxygruppen substituiert sind. Insbesondere von Bedeutung als hydroxyfunktionelle Comonomere sind (Meth(Meth)acrylsäure-C₁-C₈-Hydroxyalkylester, wie n-Hydroxyethyl-, n-Hydroxypropyl- oder n-Hydroxybutyl(meth)acrylat.

Die Mitverwendung von Comonomeren mit salzbildenden Gruppen empfiehlt sich für die Herstellung selbstdispergierbarer Copolymerisate, die z.B. für wäßrige Sekundärdispersionen geeignet sind. Comonomere mit salzbildenden Gruppen sind insbesondere Itaconsäure, Acrylsäure und Methacrylsäure.

Der Gewichtsanteil der weiteren Comonomeren im Copolymerisat kann 0 bis 39,99 %, vorzugsweise 0 bis 19,9 % und ganz besonders bevorzugt 0 bis 9,5 Gew.% betragen.

Die Herstellung des Copolymerisats erfolgt durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt.

Die Comonomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate.

Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wäßrigen Sekundär-dispersionen ist dem Fachmann bekannt und z.B. in der DE-A-37 20 860 beschrieben.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan.

Die Art und Menge der Comonomeren wird zweckdienlicherweise so gewählt, daß das erhaltene Copolymerisat eine Glasübergangstemperatur zwischen bevorzugt -60 und +140°C, besonders bevorzugt -30 und +80°C und ganz besonders bevorzugt zwischen -30 und +20°C hat. Die Glasübergangstemperatur des Copolymerisats läßt sich nach üblichen Methoden wie Differentialthermoanalyse oder Differential Scanning Calonimetrie (s. z.B. ASTM 3418/82, sog. "midpoint temperature") bestimmen.

Neben dem radikalisch polymerisierten Copolymerisat enthält die erfindungsgemäße wäßrige Dispersion mindestens ein Polyisocyanat, dessen Isocyanatgruppen mit Oximen blockiert sind.

Vorzugsweise beträgt der Gewichtsanteil des mit Oximen blockierten Polyisocyanats 0,01 bis 30 Gew.-%, besonders bevorzugt 0,1 bis 20 Gew.-%, ganz besonders bevorzugt 0,5 bis 10 Gew.-%, bezogen auf das radikalisch polymerisierte Copolymerisat.

Bei den Polyisocyanaten kommen neben aromatischen Polyisocyanaten insbesondere aliphatische und cycloaliphatische Polyisocyanate in Betracht.

Das Molekulargewicht der Polyisocyanate liegt vorzugsweise zwischen 100 und 10 000 g/mol.

Als Polyisocyanate genannt seien z.B. Diisocyanate wie Tetramethylendiisocyanat, Hexamethylendiisocyanat (HDI), Dodecamethylendiisocyanat, 1,4-Diisocyanatocyclohexan, 4,4'-Di-(isocyanatocyclohexyl)-methan (HMDI), Trimethylhexandiisocyanat, 1-Isocyanato-3,3,5-trimethyl-5-isocyanatocyclohexan (IPDI), 2,4- und 2,6-Diisocyanatotoluol (TDI), Tetramethylxylylendiisocyanat, p-Xylylendiisocyanat, 2,4'- und 4,4'-Diisocyanatodiphenylmethan sowie z.B. Isocyanurat- oder Biuretgruppen aufweisende Polyisocyanate, insbesondere solche auf Basis von 1,6-Diisocyanatohexan und/oder von 1-Isocyanato-3,3,5-trimethyl-5-isocyanatomethylcyclohexan oder Umsetzungsprodukte der Polyisocyanate mit mehrwertigen, insbesondere 2- bis 5-wertigen Alkoholen. Bevorzugt sind aliphatische Alkohole mit insgesamt 2 bis 8 C-Atomen, wie Ethylenglykol, Butandiol-1,4, Propandiol-1,2, Glycerin, Trimethylolpropan oder Pentaerythrit.

Ebenfalls geeignet sind hydrophil modifizierte Polyisocyanate. Diese sind selbstdispergierbar in Wasser, so daß zur Dispergierung auf Emulgatoren und Dispergierhilfsmittel weitgehend verzichtet werden kann. Bekannt sind selbstdispergierbare Polyisocyanate mit nicht ionischen Gruppen, insbesondere Umsetzungsprodukte von Polyisocyanaten mit Polyalkylenetheralkoholen, wie sie z.B. in der EP-A-206 059 beschrieben sind. Auch durch Einbau von ionischen Gruppen bzw. von in ionische Gruppen überführbaren Gruppen werden Polyisocyanate selbstdispergierbar. Letztere sind z.B. aus der EP-A-312 836 oder DE-A-27 08 611 bekannt.

Die Isocyanatgruppen des Polyisocyanats sind vorzugsweise zu mindestens 50, besonders bevorzugt zu mindestens 80, ganz besonders bevorzugt zu mindestens 95 % mit Oximen blockiert.

Insbesondere sind im wesentlichen alle Isocyanatgruppen des Polyisocyanats mit Oximen blockiert.

Als Oxime sind solche von aliphatischen, cycloaliphatischen oder aromatischen Aldehyden oder Ketonen, z.B. Acetonoxim, Methyleethylketonoxim, Diethylketoxim, Methylisopropylketoxim, Methylisobutylketoxim, Diisopropylketoxim, Cyclohexanonoxim, 2-Methylcyclohexanonoxim, 2,6-Dimethylcyclohexanonoxim, Acetophenonoxim, Benzophenonoxim oder Diethylglyoxim, geeignet. Bevorzugt sind Oxime von aliphatischen Ketonen mit einer Ketogruppe und insbesamt 3 bis 12 Kohlenstoffatomen, insbesondere Acetonoxim und Methylethylketonoxim.

Die Herstellung der mit Oximen blockierten Polyisocyanate kann in dem Fachmann bekannter Weise in inerten organischen Lösungsmitteln, z.B. aromatischen Kohlenwasserstoffen wie Toluol, bei Temperaturen zwischen 20 und 150°C, bevorzugt 20 und 100°C erfolgen.

Bevorzugt beträgt das Verhältnis von Isocyanatgruppen der eingesetzten Polyisocyanate zu den Oximgruppen 1 : 0,9 bis 1 : 1,4. Besonders bevorzugt liegt es zwischen 1 : 0,95 und 1 : 1,1.

Die Blockierungsreaktion kann zweckmäßigerweise in Gegenwart von Metallsalzen als Katalysatoren, z.B. Dibutylzinndilaurat oder Zinnoctoat durchgeführt werden.

Die erfindungsgemäßen wäßrigen Dispersionen können die mit Oximen blockierten Polyisocyanate in gelöster oder dispergierter Form enthalten. Zur Verbesserung der Dispergierbarkeit der blockierten Polyisocyanate in Wasser können soweit notwendig Dispergierhilfsmittel bzw. Emulgatoren zugesetzt werden. Geeignet sind z.B. die oben genannten, üblicherweise bei Emulsionspolymerisationen eingesetzten Emulgatoren. Des weiteren kommen auch Dispergierhilfsmittel, wie Polyvinylpyrrolidon oder Polyvinylalkohole in Betracht.

Umsetzungsprodukte von Polyisocyanaten mit Polyetheralkoholen, wie sie z.B. in der EP 206 059 beschrieben sind, können ebenfalls als Emulgatoren eingesetzt werden. Bevorzugt sind Umsetzungsprodukte der Polyisocyanate mit 1- bis 3-, insbesondere 1-wertigen Polyetheralkoholen. Bei den Polyetheralkoholen handelt es sich insbesondere um Polyalkylenetheralkohole mit bevorzugt 10 bis 70 C₂-C₄-Alkylenoxideinheiten. Bevorzugt sind Ethylenoxideinheiten. Polyalkylenetheralkohole mit unterschiedlichen Alkylenoxideinheiten enthalten vorzugsweise mindestens 60 % Ethylenoxideinheiten.

Es ist möglich, die Herstellung des Emulgators und der blockierten Polyisocyanate in wesentlichen in einem Verfahrensschritt durchzuführen, indem die Gesamtmenge an Polyisocyanat in beliebiger Reihenfolge mit dem Polyetheralkohol und dem Oxim umgesetzt wird.

Die Herstellung der erfindungsgemäßen wäßrigen Dispersion kann in einfacher Weise durch Zugabe der blockierten Polyisocyanate, deren Lösung oder Dispersion zur wäßrigen Dispersion des Copolymerisats erfolgen.

Eine andere Verfahrensweise besteht darin, die blockierten Polyisocyanate aufgrund ihrer im allgemeinen leichten Löslichkeit in organischen Lösungsmitteln zunächst in den Monomeren des Copolymerisats zu lösen und anschließend die radikalische Copolymerisation in Gegenwart des blockierten Polyisocyanats durchzuführen. Die Monomerlösungen können dem Reaktionsansatz wie üblich kontinuierlich zudosiert werden. Der bei der Emulsionspolymerisation der Monomeren erhaltenen wäßrigen Dispersion werden, falls notwendig, weitere für die Dispergierung des blockierten Polyisocyanats notwendige Emulgatormengen oder Dispergierhilfsmittel zugesetzt.

Den erfindungsgemäßen Dispersionen können auch organische, vorzugsweise mit Wasser mischbare Lösungsmittel als Hilfslösungsmittel, insbesondere für die blockierten Polyisocyanate, zugesetzt werden. Diese können durch Destillation aus der wäßrigen Dispersion wieder entfernt werden. Bei Lösung der blockierten Polyisocyanate in den Monomeren, kann auch bei hohen Feststoffgehalten auf ein Hilfslösemittel weitgehend verzichtet werden.

Die erfindungsgemäßen wäßrigen Dispersionen eignen sich z.B. als Anstrich- und Beschichtungsmittel für unterschiedliche Substrate mit Kunststoff-, Holz- oder Metalloberflächen oder z.B. für Textilien, Fliesstoffe, Leder oder Papier. Sie eignen sich ebenfalls für Anwendungen in der Bauchemie z.B. als Klebstoffe, Dichtungsmassen, Bindemittel oder ähnliches.

Die erfindungsgemäßen Dispersionen können je nach Verwendungszweck übliche Hilfs- und Zusatzmittel enthalten. Hierzu gehören beispielsweise Füllstoffe wie Quarzmehl, Quarzsand, hochdisperse Kieselsäure, Schwerspat, Calciumcarbonat, Kreide, Dolomit oder Talkum, die oft zusammen mit geeigneten Netzmitteln wie z.B. Polyphosphaten wie Natriumhexamethaphosphat, Naphthalinsulfonsäure, Ammonium- oder Natriumpolyacrylsäuresalze eingesetzt werden, wobei die Netzmittel im allgemeinen von 0,2 bis 0,6 Gew.-%, bezogen auf den Füllstoff, zugesetzt werden.

Auch Fungizide zur Konservierung können den Dispersionen zugesetzt werden. Diese kommen im allgemeinen in Mengen von 0,02 bis 1 Gew.-%, bezogen auf die Dispersionen zum Einsatz. Geeignete Fungizide sind beispielsweise Phenol- oder Kresol-Derivate oder Zinnorganische Verbindungen.

Besonders eignen sich die erfindungsgemäßen Dispersionen auch als Dichtstoff- oder Klebstoffzubereitungen, insbesondere als Kaschierklebstoff zur Herstellung von Verbundfolien und Glanzfolien. Als solche können die Dispersionen neben obengenannten Zusatzstoffen noch spezielle, in der Klebstofftechnologie übliche Hilfs- und Zusatzmittel enthalten. Hierzu gehören beispielsweise Verdickungsmittel, Weichmacher oder auch klebrigmachende Harze wie z.B. Naturharze oder modifizierte Harze wie Kolophoniumester oder synthetische Harze wie Phthalatharze.

Dispersionen, welche als Kaschierklebstoffe Verwendung finden, enthalten insbesondere Alkyl(meth)acrylate als Comonomere b).

Der pH-Wert der Dispersion wird bevorzugt auf einen Wert zwischen 2 und 7 eingestellt, da die Vernetzungsreaktion der blockierten Polyisocyanate mit den Copolymerisaten sauer katalysiert werden kann.

Die Dispersionen sind lagerstabil und vernetzen bei Raumtemperatur. Zur Herstellung von Verbundfolien oder Glanzfolien wird die Dispersion auf das Substrat, z.B. eine Polymerfolie bzw. eine Kartonage (Glanzfolie) aufgetragen. Die Vernetzung tritt mit Verflüchtigung des Wassers bei Raumtemperatur ein. Durch Temperaturerhöhung z.B. auf 30 bis 100°C kann die Verflüchtigung des Wassers beschleunigt werden. Anschließend kann die beschichtete Folie oder Kartonage kaschiert werden.

Bei der Beschichtung von Substraten ist es prinzipiell auch möglich, die Dispersion des Copolymerisats und das blockierte Polyisocyanat bzw. dessen Dispersion oder Lösung in getrennten Arbeitsgängen aufzutragen, so daß die erfindungsgemäße Dispersion erst auf der Substratoberfläche entsteht. Insbesondere können die Substratoberflächen zunächst mit einem mit Oximen blockierten Polyisocyanat bzw. dessen Lösung oder Dispersion beschichtet werden und zeitlich versetzt kann in einem weiteren Arbeitsgang eine wäßrige Dispersion eines radikalisch polymerisierten Copolymerisates, welches zu 0,01 bis 40 Gew.-% aus Comonomeren mit mindestens einer Aldehyd- oder Ketogruppe besteht, aufgetragen werden.

### Beispiele I

Copolymerisatdispersionen und Polyisocyanatdispersionen wurden getrennt hergestellt, anschließend gemischt und die Eigenschaften der Mischungen geprüft.

### Herstellung der Copolymerisatdispersionen

### Copolymerisatdispersion 1

In einem Reaktionsgefäß mit Rührer und zwei Zulaufgefäßen (Zulauf 1 und Zulauf 2) wurden 200 g entsalztes Wasser, 37 g des Zulaufs 1 (siehe unten) und 20 g des Zulaufs 2 vorgelegt und auf 85°C erwärmt. Nach 15 Minuten wurde innerhalb von 2 h gleichmäßig der Zulauf 1 sowie innerhalb von 2,5 h gleichmäßig der Zulauf 2 zum Reaktionsgefäß zugegeben. Nach der letzten Initiator-Zugabe (Zulauf 2) wurde die Dispersion noch 1 Stunde bei 85°C gerührt.

### Zulauf 1: (dieser Zulauf wird während der Polymerisation gerührt)

| | |
|---|---|
| 107,5 g | entsalztes Wasser |
| 400 g | Ethylacrylat |
| 90 g | Methylmethacrylat |
| 50 g | 20 gew.-%ige wäßrige Diacetonacrylamid-Lösung |
| 50 g | 20 gew.-%ige Lösung des Natriumsalzes vom p-Dodecyldiphenyletherdisulfonat in Wasser (Emulgator) |
| 50 g | 20 gew.-%ige Lösung des Umsetzungsproduks von p-Isononylphenol mit ca. 50 Mol Ethylenoxid in Wasser (Emulgator) |

### Zulauf 2:

| | |
|---|---|
| 100 g | entsalztes Wasser |
| 3 g | Natriumpersulfat |

Copolymerisatdispersionen 2 bis 13 wurden entsprechend hergestellt (Tabelle 1).

**Tabelle 1:**

| Zusammensetzung der Copolymerisate in Gew.-% | | | | | | |
|---|---|---|---|---|---|---|
| Copolymerisatdispersion | EA | nBA | MMA | HEA | DAA | AAEM |
| 1 | 80 | | 18 | | 2 | |
| 2 | 99 | | | | 1 | |
| 3 | 96 | | | | 4 | |
| 4 (z. Vergleich) | 80 | | 18 | 2 | | |
| 5 (z. Vergleich) | 100 | | | | | |
| 6 | 77,7 | | 17,4 | | | 4,9 |
| 7 | 66 | 14 | 18 | | 2 | |
| 8 | 98 | | | | 2 | |
| 9 (z. Vergleich) | 77 | | 18 | 5 | | |
| 10 (z. Vergleich) | 68 | 14 | 18 | | | |
| 11 | 99 | | | | 1 | |
| 12 (z. Vergleich) | 99 | | | 1 | | |
| 13 | 96 | | | 2 | 2 | |
| EA: Ethylacrylat nBA: n-Butylacrylat MMA: Methylmethacrylat HEA: Hydroxyethylacrylat DAA: Diacetonacrylamid AAEM: Acetoacetoxyethylmethacrylat | | | | | | |

### Herstellung der Polyisocyanat-Zubereitungen

### Mit Butanonoxim blockiertes Polyisocyanat 1 (P1)

In einem mit Stickstoff gespülten 2 l Rührgefäß wurden 1000 g eines Isocyanuratgruppen enthaltenden trimerisierten Hexamethylendiisocyanates (Basonat® PLR 8638, BASF AG) mit einem Isocyanatgehalt von 22,6 % vorgelegt und auf 80°C erhitzt. Unter Rühren wurden 1,16 g Benzoylchlorid, 0,5 g Dibutylzinndilaurat und 160,6 g eines Umsetzungsproduktes aus 2 mol Propylenoxid mit Methoxypolyethylenglykol (Komponente A; 11 Ethylenoxideinheiten; OH-Zahl: 110) innerhalb von 3 Minuten zugegeben. Nach 3 Stunden wurde das farblose Reaktionsprodukt abfiltriert. Es hatte eine Viskosität von 1600 mPas bei 25°C und einen NCO-Restgehalt von 18,2 %. In 1000 g dieser Polyisocyanatzubereitung wurden bei 80°C 378 g 2-Butanonoxim gegeben und 3 h bei 80°C gerührt.

### Mit Butanonoxim blockiertes Polyisocyanat 2 (P2)

In einem mit Stickstoff gespülten 2 l Rührgefäß wurden 1000 g eines trimerisierten Hexamethylendiisocyanates (Basonat® PLR 6638, BASF AG) mit einem Isocyanatgehalt von 22,6 % vorgelegt und auf 80°C erhitzt. Komponente A (11 Ethylenoxideinheiten; OH-Zahl: 110) wurde innerhalb 3 Minuten zugegeben. Nach 2 Stunden bei dieser Temperatur wurde das Reaktionsprodukt filtriert. Das Produkt wies einen NCO-Gehalt von 19,1 % und eine Viskosität von 1450 mPas bei 25°C auf. In 1000 g dieser Polyisocyanatzubereitung wurden bei 80°C 397 g 2-Butanonoxim gegeben und 3 h bei 80°C gerührt.

### Mit Butanonoxim blockiertes Polyisocyanat 3 (P3)

In einem mit Stickstoff gespülten 2 l Rührgefäß wurden 1000 g eines trimerisierten Hexamethylendiisocyanates (Basonat® PLR 8638, BASF AG) mit einem Isocyanatgehalt von 22,6 % vorgelegt und auf 80°C erhitzt. Komponente A wurde innerhalb 3 Minuten zugegeben. Nach 3 Stunden bei dieser Temperatur wurde das Reaktionsprodukt filtriert. Das Produkt wies einen NCO-Gehalt von 19,1 % und eine Viskosität von 1450 mPas bei 25°C auf. In 1000 g dieser Polyisocyanatzubereitung wurden bei 80°C 397 g 2-Butanonoxim in 100 g wasserfreiem Toluol gegeben und 6 h bei 80°C gerührt.

### Mit Acetonoxim blockiertes Polyisocyanat 4 (P4)

In einem mit Stickstoff gespülten 2 l Rührgefäß wurden 1000 g eines Biurets aus Hexamethylendiisocyanat (Basonat® PLR 8401, BASF AG) mit einem Isocyanatgehalt von 22,4 % vorgelegt und auf 80°C erhitzt. Komponente A (siehe oben) wurde innerhalb 3 Minuten zugegeben. Nach 2 Stunden bei dieser Temperatur wurde das Reaktionsprodukt filtriert. Die klare Flüssigkeit hatte eine Viskosität von 6000 mPas bei 25°C und einen NCO-Gehalt von 19,1 %. In 1000 g dieser Polyisocyanatzubereitung wurden bei 60°C 333 g Acetonoxim in 150 g wasserfreies Aceton gegeben und 6 h bei 60°C gerührt.

### Mit Butanonoxim blockiertes Polyisocyanat 5 (P5)

In einem mit Stickstoff gespülten 1 l Rührgefäß wurden bei 100°C zu 150 g Methylpolyethylenglykol (Molgewicht 500), 34,2 g Isophorondiisocyanat gegeben und 2 h bei dieser Temperatur gerührt. Es wurde auf Raumtemperatur abgekühlt und 281 g Isophorondiisocyanat zugegeben. Bei 50°C wurde binnen 2 h 220 g Butanonoxim zugetropft und weitere 2 h bei 50°C gehalten. 200 g dieses Umsetzungsprodukt wurden mit 25 g Toluol vermischt.

Der Feststoffgehalt der Emulsion der blockierten Polyisocyanate wurde jeweils auf 25 Gew.% eingestellt.

### Prüfung der Lagerstabilität

Mischungen der mit Ketoximen blockierten Polyisocyanate P1 bis P5 mit der Copolymerisatdispersion 1 waren noch nach 3 Tagen bei Raumtemperatur unverändert.

### Prüfung der Vernetzungsfähigkeit

In je 50 g der Dispersionen 2 und 8 wurden folgende Mengen einer 25 %igen wäßrigen Emulsion aus 25 g blockiertem Polyisocyanat P5 und 75 g Wasser gegeben:

**Tabelle 2:**

| Zusammensetzung der Mischungen | |
|---|---|
| a) | 50 g Dispersion 2 und 0,5 g Emulsion |
| b) | 50 g Dispersion 2 und 1,0 g Emulsion |
| c) | 50 g Dispersion 2 und 2,0 g Emulsion |
| d) | 50 g Dispersion 2 ohne Emulsion |
| | |
| e) | 50 g Dispersion 8 und 0,5 g Emulsion |
| f) | 50 g Dispersion 8 und 1,0 g Emulsion |
| g) | 50 g Dispersion 8 und 2,0 g Emulsion |
| h) | 50 g Dispersion 8 ohne Emulsion |
| | |
| i) | 50 g Vergleichsdispersion 5 und 0,5 g Emulsion |
| j) | 50 g Vergleichsdispersion 10 und 0,5 g Emulsion |

Diese Dispersionszubereitungen wurden verfilmt und die Filme 1 Woche bei Raumtemperatur getrocknet. Anschließend wurde das Quellungsverhalten als Maß für den Vernetzungsgrad dieser Filme in Toluol und DMF untersucht, indem ca. 1 g der verfilmten Proben in Toluol und DMF 2 Tage gelagert und die Lösungsmittelaufnahme in % gemessen wurde.

**Tabelle 3:**

| Lösungsmittelaufnahme in % | |
|---|---|
| Toluol | DMF |
| a) 1845 % | 1790 % |
| b) 1440 % | 1395 % |
| c) 1100 % | 1105 % |
| d) keine Vernetzung (Polymer löst sich) | |
| | |
| e) 1790 % | 1870 % |
| f) 1230 % | 1250 % |
| g) 830 g | 900 % |
| h) keine Vernetzung (Polymer löst sich) | |
| | |
| i) keine Vernetzung (Polymer löst sich) | |
| j) keine Vernetzung (Polymer löst sich) | |

### Anwendungstechnische Prüfung

### Herstellung der Verbundfolien

In die Copolymerdispersionen 1 bis 3 sowie 6 und 7 wurden 3 Gew.-% (bezogen auf die Copolymerisatdispersion) der Emulsion des emulgierbaren blockierten Polyisocyanats (P1) eingerührt und homogen verteilt. Anschließend wurden diese Zubereitungen mit einer Trockenschichtdicke von 3 g/m² auf verschiedene auf 50°C erwärmte Folien (Polyethylentherphtalat: PETP; Polyamid: PA; Polyvinylchlorid: PVC; Polypropylen (coronavorbehandelt): PP; Aluminium: Alu) gerakelt, und nach 20 sek. mit einer Polyethylenfolie (coronavorbehandelt) kaschiert. Anschließend wurden die Folien 7 Tage bei Raumtemperatur und Normalklima gelagert und danach in 2 cm breite Streifen zerschnitten. Diese Streifen wurden dann bei 23°C im Winkel von 180° mit einer Geschwindigkeit von 100 m/min abgezogen. Es wurde die Schälkraft in N bei den 2 cm breiten Streifen bestimmt.

### Herstellung der Glanzfolien

In die Copolymerdispersionen 11 bis 13 wurden jeweils 4 Gew.-% der Emulsion des blockierten Polyisocyanats (P1) eingerührt. Anschließend wurde diese Zubereitung mit einer Trockenschichtdicke von 5 g/m² auf mit Offsetfarben bedruckten Kartonagen gerakelt und nach ca. 30 sec mit biaxial verstreckten Polypropylenfolien (o-PP) oder Acetatfolien kaschiert.

Es wurde geprüft, ob es beim Abreißen der Folie zu einem Papier- und Farbausriß von der Kartonage kommt (Schälprüfung sofort nach Kaschieren und nach einer Woche) und ob sich im Bereich von Nuten (Prägungen in der Kartonage) die Folie ablöst bzw. nicht fest anliegt (Nutstandfestigkeit sofort nach Kaschieren oder nach 6 Wochen).

**Tabelle 4:**

| Schälfestigkeiten in N/cm der Verbundfolien nach 7 Tagen | | | | | |
|---|---|---|---|---|---|
| | PETP/PE | PA/PE | PVC/PE | PP/PE | Alu/Pe |
| Dispersion 1 + 3 % Polyisocyanat 1 | 3,0 | 3,0 | 3,2 | 2,5 | - |
| Dispersion 1 ohne Zusatz | 1,4 | 1,8 | 1,0 | 0,8 | - |
| Dispersion 2 + 3 % Polyisocyanat 1 | 2,9 | 3,0 | 3,3 | 2,5 | - |
| Dispersion 2 ohne Zusatz | 1,2 | 1,3 | 1,5 | 0,9 | - |
| Dispersion 3 + 3 % Polyisocyanat 1 | 3,0 | 2,5 | 3,1 | 2,8 | - |
| Dispersion 6 + 3 % Polyisocyanat 1 | 2,5 | 3,0 | 2,4 | 2,5 | 2,1 |
| Dispersion 7 + 3 % Polyisocyanat 1 | 2,1 | 2,8 | 2,0 | 1,8 | 1,8 |

**Tabelle 5:**

| Schälprüfung der Glanzfolien | | | | | | |
|---|---|---|---|---|---|---|
| | Dispersion mit 3 Gew.-% P1 | | | Dispersion ohne P1 | | |
| | 11 | 12 | 13 | 11 | 12 | 13 |
| o-PP-Folie | | | | | | |
| sofort | 1 | 1 | 1 | 2 | 2 | 2 |
| nach 1 Woche | 1 | 1 | 1 | 2 | 2 | 2 |
| Acetatfolie | | | | | | |
| sofort | 1 | 1 | 1 | 2 | 2 | 2 |
| nach 1 Woche | 1 | 1 | 1 | 2 | 2 | 2 |
| Note 1: Vollständiger Papier- oder Farbausriß | | | | | | |
| Note 2: Teilweiser Papier- oder Farbausriß | | | | | | |

**Tabelle 6:**

| Nutstandfestigkeit der Glanzfolien | | | | | | |
|---|---|---|---|---|---|---|
| | Dispersion mit 3 Gew.-% P1 | | | Dispersion ohne P1 | | |
| | 11 | 12 | 13 | 11 | 12 | 13 |
| o-PP-Folie | | | | | | |
| sofort | + | + | + | - | - | - |
| nach 6 Wochen | + | - | + | - | - | - |
| Acetatfolie | | | | | | |
| sofort | + | + | + | - | - | - |
| nach 6 Wochen | - | - | + | - | - | - |
| +: keine Ablösung an der Nut | | | | | | |
| -: Ablösungen an der Nut | | | | | | |

### Beispiele II

Herstellung von Copolymerisatdispersionen in Gegenwart von mit Oximen blockierten Polyisocyanaten
- P6: Umsetzungsprodukt von 1 Mol Hexamethylendiisocyanat mit 2 Mol Acetonoxim.
- P7: Umsetzungsprodukt von 1 Mol Isophorondiisocyanat mit 2 Mol Butanonoxim.
- P8: Umsetzungsprodukt von 300 g 1,3, 5-Tris-[6-isocyanat-hexyl]2,4,6-trioxo-hexahydro-1,3-5-triazin (Basonat® PLR 8638, BASF AG) mit einem Isocyanatgehalt von 22 % mit 138 g Butanonoxim.
- P9: Umsetzungsprodukt von 300 g Bis-[6-isocyanat-hexylaminocarbonyl]-(6-isocyanat-hexyl)-amin (Basonat® PLR 8401) mit einem Isocyanatgehalt von 22 % mit 138 g Butanonoxim.

### Herstellung der Copolymerisatdispersionen

### Copolymerisatdispersion 14

In einem Reaktionsgefäß mit Rührer und zwei Zulaufgefäßen (Zulauf 1 und Zulauf 2) wurden 262 g entsalztes Wasser, 35 g des Zulaufs 1 (siehe unten) und 20 g des Zulaufs 2 vorgelegt und auf 85°C erwärmt. Nach 15 Minuten wurde innerhalb von 2 h gleichmäßig der Zulauf 1 sowie innerhalb von 2,5 h gleichmäßig der Zulauf 2 zum Reaktionsgefäß zugegeben. Nach der letzten Initiator-Zugabe (Zulauf 2) wurde die Dispersion noch 1 Stunde bei 85°C gerührt.

### Zulauf 1: (dieser Zulauf wurde während der Polymerisation gerührt)

- 75 g: entsalztes Wasser
- 500 g: Monomerlösung aus:
407 g Ethylacrylat
90 g Methylmethacrylat
3 g P8
- 13 g: 20 gew.-%ige wäßrige Diacetonacrylamid-Lösung
- 50 g: 20 gew.-%ige Lösung des Natriumsalzes von p-Dodecyldiphenyl etherdisulfonat in Wasser
- 50 g: 20 gew.-%ige Lösung des Umsetzungsproduks von p-Isononylphenol mit 50 Mol Ethylenoxid in Wasser

### Zulauf 2:

- 100 g: entsalztes Wasser
- 3 g: Natriumpersulfat

### Copolymerisatdispersionen 15 bis 21

Bei den weiteren Copolymerisatdispersionen wurden lediglich die Art und Menge der Monomeren sowie des blockierten Polyisocyanats in Zulauf 1 geändert, die Emulgatormengen waren gleich.

### Copolymerisatdispersion 15

- 62 g: entsalztes Wasser
- 501 g: Monomerlösung aus:
405 g Ethylacrylat
90 g Methylmethacrylat
6 g P8
- 25 g: 20 %ige wäßrige Diacetonacrylamid-Lösung

### Copolymerisatdispersion 16

- 50 g: entsalztes Wasser
- 502 g: Monomerlösung aus:
403 g Ethylacrylat
90 g Methylmethacrylat
9 g P8
- 38 g: 20 %ige wäßrige Diacetonacrylamid-Lösung

### Copolymerisatdispersion 17

- 75 g: entsalztes Wasser
- 500,5 g: Monomerlösung aus:
407,5 g Ethylacrylat
90 g Methylmethacrylat
3 g P7
- 12,5 g: 20 %ige wäßrige Diacetonacrylamid-Lösung

### Copolymerisatdispersion 18

- 62,5 g: entsalztes Wasser
- 501 g: Monomerlösung aus:
405 g Ethylacrylat
90 g Methylmethacrylat
6 g P7
- 25 g: 20 %ige wäßrige Diacetonacrylamid-Lösung

### Copolymerisatdispersion 19

- 50 g: entsalztes Wasser
- 501,5 g: Monomerlösung aus:
402,5 g Ethylacrylat
90 g Methylmethacrylat
9 g P7
- 37,5 g: 20 %ige wäßrige Diacetonacrylamid-Lösung

### Copolymerisatdispersion 20

- 50 g: entsalztes Wasser
- 500 g: Monomerlösung aus:
105 g n-Butylacrylat
300 g Ethylacrylat
90 g Acrylnitril
5 g P6
- 1,9 g: Acetoacetoxyethylmethacrylat

### Copolymerisatdispersion 21

- 50 g: entsalztes Wasser
- 480 g: Monomerlösung aus:
100 g n-Butylacrylat
290 g Ethylacrylat
50 g Acrylnitril
20 g Methylacrylat
10 g Hydroxyethylacrylat
10 g P9
- 20 g: Acetoacetoxyethylmethacrylat

### Vergleichsdispersionen 14a bis 19a

### Im Zulauf 1 wurde kein blockiertes Polyisocyanat zugesetzt.

### Prüfung der Vernetzungsfähigkeit

Die Dispersionen wurden bei Raumtemperatur verfilmt. Dazu wurden die Dispersionen in eine entsprechende Silikonform gegossen, so daß das Wasser bei Raumtemperatur verdampfen konnte. Die so erhaltenen Filme mit einer Dicke von 1 mm wurden noch 1 Woche bei Raumtemperatur getrocknet. Anschließend wurde das Quellungsverhalten, welches ein Maß für den Vernetzungsgrad ist, in DMF, Toluol und Aceton untersucht. Dazu wurden ca. 1 g der verfilmten Proben 3 Tage in DMF, Toluol und Aceton gelagert und die Lösungsmittelaufnahme in % gemessen.

**Tabelle 7:**

| Lösungsmittelaufnahme in %: | | | |
|---|---|---|---|
| | DMF | Toluol | Aceton |
| Dispersion 14 | 1480 | 1523 | 1210 |
| Dispersion 15 | 987 | 1025 | 806 |
| Dispersion 16 | 766 | 788 | 651 |
| | | | |
| Dispersion 17 | 1551 | 1529 | 1255 |
| Dispersion 18 | 1129 | 1108 | 891 |
| Dispersion 19 | 886 | 838 | 727 |
| | | | |
| Vergleichsdispersionen | | | |
| | | | |
| Dispersion 14a | gelöst | gelöst | gelöst |
| Dispersion 15a | gelöst | gelöst | gelöst |
| Dispersion 16a | gelöst | gelöst | gelöst |
| | | | |
| Dispersion 17a | gelöst | gelöst | gelöst |
| Dispersion 18a | gelöst | gelöst | gelöst |
| Dispersion 19a | gelöst | gelöst | gelöst |

Die Filme aus den Dispersionen 11a-16a wurden nicht vernetzt, sie lösten sich auf.

## Patentansprüche

1. Wäßrige Dispersionen eines radikalisch polymerisierten Copolymerisats, welches zu 0,01 bis 40 Gew.-% aus Comonomeren mit mindestens einer Aldehyd- oder Ketogruppe besteht, enthaltend mindestens ein Polyisocyanat, dessen Isocyanatgruppen mit Oximen blockiert sind.

2. Wäßrige Dispersionen nach Anspruch 1, wobei das radikalisch polymerisierte Copolymerisat eine Glasübergangstemperatur zwischen -60 und +140°C hat und
a) 0,01 bis 40 Gew.-% mindestens eines Comonomeren mit mindestens einer Aldehyd- oder Ketogruppe,
b) 60 bis 99,99 Gew.-% wenigstens eines Alkylesters der Acryl- oder Methacrylsäure mit 1 bis 20 C-Atomen im Alkylrest, Vinylesters von 1 bis 20 C-Atome enthaltenden Carbonsäuren, Vinylaromaten mit bis zu 20 C-Atomen, ethylenisch ungesättigten Nitrils mit 3 bis 6 C-Atomen, Vinylhalogenids und/oder nichtaromatischen Kohlenwasserstoffs mit 2 bis 8 C-Atomen und mindestens zwei olefinischen Doppelbindungen und
c) 0 bis 39,99 Gew.-% weiteren copolymerisierbaren Monomeren
enthält.

3. Wäßrige Dispersionen nach den Ansprüchen 1 oder 2, wobei es sich beim mit Oximen blockierten Polyisocyanat um ein aliphatisches Polyisocyanat mit 2 bis 6 Isocyanatgruppen handelt.

4. Verfahren zur Herstellung von wäßrigen Dispersionen gemäß den Ansprüchen 1 bis 3, dadurch gekennzeichnet, daß Polyisocyanate mit Oximen blockiert und anschließend der wäßrigen Dispersion des Copolymerisats zugesetzt werden.

5. Verfahren zur Herstellung von wäßrigen Dispersionen gemäß den Ansprüchen 1 bis 3, dadurch gekennzeichnet, daß die mit Oximen blockierten Polyisocyanate in den Monomeren des Copolymerisats gelöst werden und die radikalische Copolymerisation in Gegenwart der blockierten Polyisocyanate durchgeführt wird.

6. Verwendung von wäßrigen Dispersionen gemäß den Ansprüchen 1 bis 3 als Klebstoffzubereitung.

7. Verwendung von wäßrigen Dispersionen gemäß den Ansprüchen 1 bis 3 als Kaschierklebstoff zur Herstellung von Verbundfolien und Glanzfolien.

8. Beschichtete Substrate, erhältlich unter Verwendung einer wäßrigen Dispersion gemäß den Ansprüchen 1 bis 3.

9. Verbundfolien, erhältlich unter Verwendung einer wäßrigen Dispersion gemäß den Ansprüchen 1 bis 3.

10. Glanzfolien, erhältlich unter Verwendung einer wäßrigen Dispersion gemäß den Ansprüchen 1 bis 3.

## Claims

1. An aqueous dispersion of a copolymer which is prepared by free radical polymerization and comprises from 0.01 to 40% by weight of comonomers having at least one aldehyde or keto group, containing at least one polyisocyanate whose isocyanate groups are blocked with oximes.

2. An aqueous dispersion as claimed in claim 1, wherein the copolymer prepared by free radical polymerization has a glass transition temperature of from -60 to +140°C and contains
a) from 0.01 to 40% by weight of at least one comonomer having at least one aldehyde or keto group,
b) from 60 to 99.99% by weight of at least one alkyl ester of acrylic or methacrylic acid where the alkyl radical is of 1 to 20 carbon atoms, of a vinyl ester of a carboxylic acid of 1 to 20 carbon atoms, of a vinyl aromatic of up to 20 carbon atoms, of an ethylenically unsaturated nitrile of 3 to 6 carbon atoms, of a vinyl halide and/or of a nonaromatic hydrocarbon having 2 to 8 carbon atoms and at least two olefinic double bonds and
c) from 0 to 39.99% by weight of further copolymerizable monomers.

3. An aqueous dispersion as claimed in claim 1 or 2, wherein the polyisocyanate blocked with oximes is an aliphatic polyisocyanate having from 2 to 6 isocyanate groups.

4. A process for the preparation of an aqueous dispersion as claimed in any of claims 1 to 3, wherein polyisocyanates are blocked with oximes and are then added to the aqueous dispersion of the copolymer.

5. A process for the preparation of an aqueous dispersion as claimed in any of claims 1 to 3, wherein the polyisocyanates blocked with oximes are dissolved in the monomers of the copolymer, and the free radical copolymerization is carried out in the presence of the blocked polyisocyanates.

6. Use of an aqueous dispersion as claimed in any of claims 1 to 3 as an adhesive preparation.

7. Use of an aqueous dispersion as claimed in any of claims 1 to 3 as a laminating adhesive for the production of laminated films and high-gloss films.

8. A coated substrate obtainable using an aqueous dispersion as claimed in any of claims 1 to 3.

9. A laminated film obtainable using an aqueous dispersion as claimed in any of claims 1 to 3.

10. A high-gloss film obtainable using an aqueous dispersion as claimed in any of claims 1 to 3.

## Revendications

1. Dispersions aqueuses d'un copolymères polymérisé par voie radicalaire, qui se compose de jusqu'à 0,01 à 40% en poids de comonomères comportant au moins un groupe aldéhyde ou céto, contenant au moins un polyisocyanate, dont les radicaux isocyanate sont bloqués avec des oximes.

2. Dispersions aqueuses suivant la revendication 1, où le copolymère polymérisé par voie radicalaire possède une température de transition vitreuse comprise entre -60 et +140°C et contient
a) 0,01 à 40% en poids d'au moins un comonomère avec au moins un groupe aldéhyde ou céto,
b) 60 à 99,9% en poids d'au moins un ester alkylique de l'acide acrylique ou de l'acide méthacrylique, dont le reste alkyle comporte de 1 à 20 atomes de carbone, un ester vinylique d'acides carboxyliques contenant de 1 à 20 atomes de carbone, de composés vinylaromatiques comportant jusqu'à 20 atomes de carbone, d'un nitrile éthyléniquement insaturé comportant de 3 à 6 atomes de carbone, d'un halogénure de vinyle et/ou d'un hydrocarbure non aromatique comportant de 2 à 8 atomes de carbone et au moins deux doubles liaisons oléfiniques et
c) 0 à 39,99% en poids d'un monomère copolymérisable supplémentaire.

3. Dispersions aqueuses suivant la revendication 1 ou 2, où, dans le cas du polyisocyanate bloqué par des oximes, il s'agit d'un polyisocyanate aliphatique qui comporte de 2 à 6 radicaux isocyanate.

4. Procédé de préparation de dispersions aqueuses suivant les revendications 1 à 3, caractérisé en ce que l'on bloque les polyisocyanates avec des oximes et on les ajoute ensuite à la dispersion aqueuse du copolymère.

5. Procédé de préparation de dispersions aqueuses suivant les revendications 1 à 3, caractérisé en ce que l'on dissout les polyisocyanates bloqués avec des oximes dans les monomères du copolymère et on entreprend la copolymérisation radicalaire en présence des polyisocyanates bloqués.

6. Utilisation de dispersions aqueuses suivant l'une quelconque des revendications 1 à 3 comme préparation de colle.

7. Utilisation des dispersions aqueuses suivant l'une quelconque des revendications 1 à 3 comme colle de lamification ou de stratification destinée à la fabrication de feuilles lamifiées et de feuilles brillantes.

8. Supports revêtus, que l'on peut obtenir par l'utilisation d'une dispersions aqueuse suivant l'une quelconque des revendications 1 à 3.

9. Feuilles lamifiées, que l'on peut obtenir par l'utilisation d'une dispersion aqueuse suivant l'une quelconque des revendications 1 à 3.

10. Feuilles brillantes, que l'on peut obtenir par l'utilisation d'une dispersion aqueuse suivant l'une quelconque des revendications 1 à 3.
